# EUROPÄISCHE PATENTSCHRIFT

(11) **EP 0 721 973 B1**
(45) Veröffentlichungstag und Bekanntmachung des Hinweises auf die Patenterteilung: **27.08.1997**
(21) Anmeldenummer: 95119900.9
(22) Anmeldetag: 16.12.1995
(51) Int. Cl.: C09B 29/045

(54) **Verfahren zur Herstellung von Benzthiazolylazoanilinen**
Process for the preparation of benzothiazolylazoanilines
Procédé pour la préparation de benzothiazolylazoanilines

(30) Priorität: 23.12.1994 DE 4446382
(43) Veröffentlichungstag der Anmeldung: 17.07.1996
(73) Patentinhaber: BASF AKTIENGESELLSCHAFT, 67056 Ludwigshafen (DE)
(72) Erfinder: Bermes, Rudolf, Dr., D-67069 Ludwigshafen (DE)

(56) Entgegenhaltungen:
- EP-A- 0 483 382
- FR-A- 2 456 763
- FR-A- 2 624 130
- US-A- 4 271 071
- DYES AND PIGMENTS, Bd. 16, Nr. 1, 1.Januar 1991, Seiten 77-81, XP000208010 PENCHEV A ET AL: "DIAZOTIZATION OF 2-AMINO-6-METHOXYBENZOTHIAZOLE AT ELEVATED TEMPERATURE"
- JOURNAL OF CHEMICAL TECHNOLOGY AND BIOTECHNOLOGY (INTERNATIONAL JOURNAL OF BIOTECHNICAL AND CHEMICAL PROCESSES), Bd. 53, Nr. 3, 1.Januar 1992, Seiten 301-308, XP000267180 PETERS A T ET AL: "DISPERSE DYES: 4-HETARYLAZO DERIVATIVES FROM N-B-CYANOETHYL-N-B-HYDROXYETHYLANILINE"
- DYES AND PIGMENTS, Bd. 20, Nr. 1, 1992, BARKING GB, Seiten 137-145, XP002002193 J.SOKOLOWSKA-GAJDA ET AL.: "A New Medium for the Diazotization of 2-Amino-6-nitrobenzothiazole and 2-Aminobenzothiazole"

## Beschreibung

Die vorliegende Erfindung betrifft ein neues Verfahren zur Herstellung von Benzthiazolylazoanilinen durch Diazotierung von 2-Aminobenzthiazolen in wäßrig-saurem Medium und anschließendes Kuppeln mit Anilinen in wäßrig-saurem Medium.

In der DE-A-3 839 459 wird die Diazotierung von 2-Amino-(5),6,(7)-dichlorbenzthiazol (Gemisch) mit Nitrosylschwefelsäure in einem Gemisch aus Eisessig, Propionsäure und Phosphorsäure und die anschließende Kupplung des resultierenden Diazoniumsalzes mit N-(2-Acetoxyethyl)-N-methyl-3-methylanilin beschrieben.

Aufgabe der vorliegenden Erfindung war es nun, ein neues Verfahren zur Herstellung von Benzthiazolylazoanilinen bereitzustellen, bei dem 2-Aminobenzthiazole in wäßrig-saurem Medium diazotiert und anschließend in wäßrig-saurem Medium mit Anilinen gekuppelt werden. Die Zielprodukte sollten dabei in hoher Ausbeute und Reinheit erhalten werden.

Es wurde gefunden, daß die Herstellung von Azofarbstoffen der Formel I 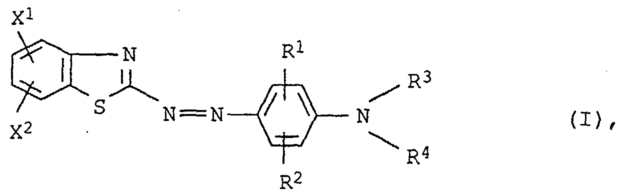 in der
- X¹: Wasserstoff, Nitro oder Halogen,
- X²: Wasserstoff, C₁-C₄-Alkoxy oder Halogen,
- R¹: Wasserstoff oder C₁-C₄-Alkoxy,
- R²: Wasserstoff, C₁-C₄-Alkyl oder C₁-C₄-Alkanoylamino und
- R³ und R⁴: unabhängig voneinander jeweils C₁-C₆-Alkyl, das durch Hydroxy, C₁-C₄-Alkoxy, C₁-C₄-Alkanoyloxy, Cyano oder Halogen substituiert sein kann, bedeuten,
durch Diazotierung von Aminen der Formel II 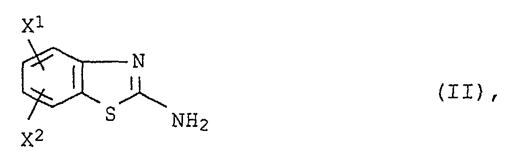 in der X¹ und X² jeweils die obengenannte Bedeutung besitzen, und anschließendes Kuppeln mit Anilinen der Formel III 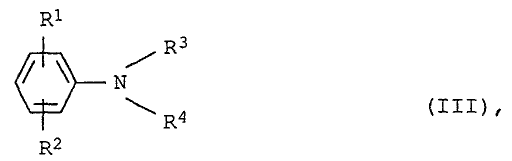 in der R¹, R², R³ und R⁴ jeweils die obengenannte Bedeutung besitzen, vorteilhaft gelingt, wenn man
a) in einem 1. Schritt die Diazotierung des Amins der Formel II in einer Mischung, bestehend im wesentlichen aus Phosphorsäure, Schwefelsäure und Wasser, mit einem üblichen Diazotierungsmittel vornimmt und
b) in einem 2. Schritt das resultierende Reaktionsgemisch zu einer wäßrig-sauren Lösung des Anilins der Formel III gibt.

Alle in den obengenannten Formeln auftretenden Alkylreste können sowohl geradkettig als auch verzweigt sein.

Wenn in den obengenannten Formeln substituierte Alkylreste auftreten, so weisen sie in der Regel 1 bis 3, vorzugsweise 1 oder 2 Substituenten auf.

Reste X¹ und X² sind z.B. Fluor, Chlor oder Brom.

Reste X² sind weiterhin, wie auch Reste R¹, z.B. Methoxy, Ethoxy, Propoxy, Isopropoxy, Butoxy, Isobutoxy, sec-Butoxy oder tert-Butoxy.

Reste R², R³ und R⁴ sind z.B. Methyl, Ethyl, Propyl, Isopropyl, Butyl, Isobutyl, sec-Butyl oder tert-Butyl.

Reste R² sind weiterhin z.B. Formylamino, Acetylamino, Propionylamino, Butyrylamino oder Isobutyrylamino.

Reste R³ und R⁴ sind weiterhin z.B. Pentyl, Isopentyl, Neopentyl, tert-Pentyl, Hexyl, 2-Methylpentyl, 2-Hydroxyethyl, 2- oder 3-Hydroxypropyl, 2- oder 4-Hydroxybutyl, 2-Methoxyethyl, 2- oder 3-Methoxypropyl, 2- oder 4-Methoxybutyl, 2-Ethoxyethyl, 2- oder 3-Ethoxypropyl, 2- oder 4-Ethoxybutyl, 2-Acetoxyethyl, 2- oder 3-Acetoxypropyl, 2- oder 4-Acetoxybutyl, 2-Cyanoethyl, 2- oder 3-Cyanopropyl, 2- oder 4-Cyanobutyl, 2-Chlorethyl, 2- oder 3-Chlorpropyl, 2- oder 4-Chlorbutyl oder Trifluormethyl.

Bevorzugt ist eine Verfahrensweise zur Herstellung von Azofarbstoffen der Formel I, in der X¹ Wasserstoff bedeutet.

Weiterhin bevorzugt ist eine Verfahrensweise zur Herstellung von Azofarbstoffen der Formel I, in der X² C₁-C₄-Alkoxy, insbesondere Methoxy, bedeutet.

Weiterhin bevorzugt ist eine Verfahrensweise zur Herstellung von Azofarbstoffen der Formel I, in der R¹ und R² jeweils Wasserstoff bedeuten.

Weiterhin bevorzugt ist eine Verfahrensweise zur Herstellung von Azofarbstoffen der Formel I, in der R³ und R⁴ unabhängig voneinander jeweils C₁-C₆-Alkyl, das gegebenenfalls durch Hydroxy substituiert ist, bedeuten.

Besonders bevorzugt ist eine Verfahrensweise zur Herstellung von Azofarbstoffen der Formel Ia 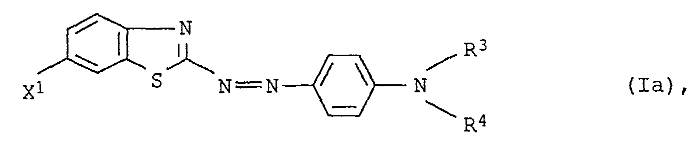 in der X¹ C₁-C₄-Alkoxy, insbesondere Methoxy, R³ C₁-C₆-Alkyl, insbesondere Methyl oder Ethyl, und R⁴ C₁-C₆-Alkyl, das gegebenenfalls durch Hydroxy substituiert ist, insbesondere 2-Hydroxyethyl, bedeuten.

Das erfindungsgemäße Verfahren wird in der Regel bei einer Temperatur vorgenommen, die im 1. Schritt -20 bis +10^{o}C, vorzugsweise -10 bis 0^{o}C, und im 2. Schritt -10 bis +20^{o}C, vorzugsweise -5 bis 0°C, beträgt.

Im 1. Schritt richtet sich die Temperatur insbesondere an der Stabilität des zu bildenden Diazoniumsalzes aus.

Bevorzugt ist eine Verfahrensweise, bei der man das Amin der Formel II in einer Mischung, bestehend im wesentlichen aus 10 bis 65 Gew.-% Phosphorsäure, 5 bis 25 Gew.-% Schwefelsäure und 10 bis 85 Gew.-% Wasser, jeweils bezogen auf das Gewicht der Mischung diazotiert.

Besonders bevorzugt ist eine Verfahrensweise, bei der man das Amin der Formel II in einer Mischung, bestehend im wesentlichen aus 20 bis 55 Gew.-%, insbesondere 30 bis 50 Gew.-%, Phosphorsäure, 5 bis 20 Gew.-% Schwefelsäure und 30 bis 75 Gew.-%, insbesondere 35 bis 65 Gew.-%, Wasser, jeweils bezogen auf das Gewicht der Mischung, diazotiert.

Die obengenannten Mengen an Phosphorsäure und Schwefelsäure beziehen sich dabei jeweils auf 100 gew.-%ige Säure (H₃PO₄ und H₂SO₄).

Die obengenannten Prozentangaben sind so anzuwenden, daß ihre Summe jeweils 100 Gew.-% ergibt.

Zur Diazotierung im 1. Schritt werden übliche Diazotierungsmittel angewendet. Das sind solche, die dem Fachmann hinlänglich bekannt sind. Insbesondere sind zu nennen Alkalinitrite, wie Natrium- oder Kaliumnitrit oder Nitrosylschwefelsäure.

Bei der Diazotierung des Amins der Formel II wendet man in der Regel 5 bis 20 Gew.-%, vorzugsweise 10 bis 15 Gew.-%, Amin II, jeweils bezogen auf das Gewicht der Phosphorsäure/Schwefelsäure/Wasser-Mischung an.

Je mol Amin II kommen dabei im allgemeinen 1,0 bis 1,2 Moläquivalent, vorzugsweise 1,0 bis 1,1 Moläquivalent, Diazotierungsmittel zur Anwendung.

Im 2. Schritt wird die Kupplung vorgenommen, indem man das Reaktionsgemisch aus Schritt 1 zu einer wäßrig-sauren Lösung des Anilins der Formel III gibt.

Je mol Amin II wendet man üblicherweise 1,0 bis 1,1 mol, insbesondere 1,0 bis 1,05 mol, Anilin III an.

Die wäßrig-saure Lösung weist dabei in der Regel 2 bis 10 Gew.-%, vorzugsweise 2 bis 5 Gew.-%, jeweils bezogen auf das Gewicht der Lösung, Anilin III auf.

Der pH-Wert der wäßrig-sauren Lösung liegt im allgemeinen bei 0 bis 5, vorzugsweise 0,5 bis 3,0.

Geeignete Säuren, die zur Herstellung der wäßrig-sauren Lösung verwendet werden können, sind z.B. Schwefelsäure oder Salzsäure.

Das erfindungsgemäße Verfahren wird zweckmäßig so durchgeführt, daß man in einer geeigneten Apparatur, z.B. in einem Rührkessel, im 1. Schritt zunächst Phosphorsäure, Schwefelsäure und Wasser vorlegt und dann das Amin II zugibt. Nach Einstellung der obengenannten Temperatur erfolgt dann die Zugabe des Diazotierungsmittels, die üblicherweise portionsweise vorgenommen wird. Nach einer Nachrührphase von 1 bis 2 Stunden wird das resultierende Reaktionsgemisch unter Rühren zu der wäßrig-sauren Lösung des Anilins III gegeben. Nach beendeter Umsetzung kann das Reaktionsgemisch filtriert werden. Der Azofarbstoff der Formel I wird dabei als Feststoff erhalten.

Mittels des erfindungsgemäßen Verfahrens, das sowohl in kontinuierlicher als auch diskontinuierlicher Arbeitsweise vorgenommen werden kann, erhält man die Azofarbstoffe der Formel I in hoher Ausbeute und Reinheit.

Die Azofarbstoffe der Formel I sind geeignet zur Färbung von Polyamiden oder Mischungen aus Polyamiden und Polyestern. Insbesondere sind sie aber zur Herstellung von basischen Farbstoffen geeignet, indem sie einer Quaternierung unterworfen werden.

Die folgenden Beispiele sollen die Erfindung näher erläutern.

### Beispiel 1

In ein Rührgefäß wurden 1200 ml Wasser, 1330 g 85 gew.-%ige Phosphorsäure und 294 g 96 gew.-%ige Schwefelsäure vorgelegt. In diese Mischung wurden 400 g 2-Amino-7-methoxybenzthiazol eingetragen und bei 50 bis 60°C gelöst. Danach kühlte man die Lösung auf -12 bis -8°C und ließ innerhalb von 1 h 735 g 42 gew.-%ige Nitrosylschwefelsäure bei der obengenannten Temperatur zulaufen. Danach rührte man 1 h bei -8 bis -3°C nach.

Die resultierende Lösung ließ man bei -2 bis 0°C zu einer Lösung von 380 g N-Ethyl-N-(2-hydroxyethyl)anilin in 5000 ml Wasser, 300 g 96 gew.-%ige Schwefelsäure, 50 g Amidosulfonsäure und 8000 g Eis laufen. Man rührte 1 h nach und ließ 50 gew.-%ige Natronlauge laufen, bis der pH-Wert des Reaktionsgemisches 1,5 betrug. Man verdünnte mit Wasser, saugte ab und wusch mit Wasser nach und trocknete.

Man erhielt 740 g des Farbstoffs der Formel 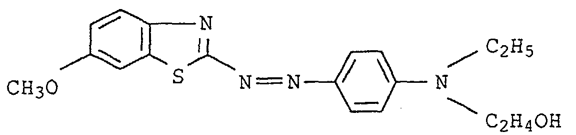 (Reinheit: 98 %)

### Beispiel 2

Man verfuhr analog Beispiel 1, verwendete jedoch 348 g N-Methyl-N-(2-hydroxyethyl)anilin als Kupplungskomponente. Man erhielt 720 g des Farbstoffs der Formel 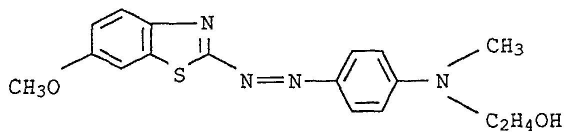 (Reinheit: 99 %).

### Beispiel 3

Man verfuhr analog Beispiel 1, verwendete jedoch 278,7 g N,N-Dimethylanilin als Kupplungskomponente. Man erhielt 625 g des Farbstoffs der Formel 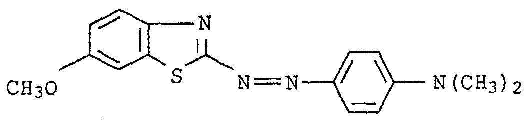 (Reinheit: 97 %).

### Beispiel 4

In ein Rührgefäß wurden 134 ml Wasser, 153 g 85 gew.-%ige Phosphorsäure und 34 g 96 gew.-%ige Schwefelsäure vorgelegt. In diese Mischung wurden 41 g 2-Amino-7-methoxybenzthiazol (88,5 gew.-%ig) eingetragen und bei 50 bis 60^{o}C gelöst. Danach kühlte man die Lösung auf -6 bis 0^{o}C und gab innerhalb von 1 h 15 g Natriumnitrit bei der obengenannten Temperatur zu. Danach rührte man 1 h bei -6 bis 0^{o}C nach.

Die resultierende Lösung ließ man bei -2 bis 0^{o}C zu einer Lösung von 35 g N-Ethyl-N-(2-hydroxyethyl)anilin in 600 ml Wasser, 29 g 96 gew.-%ige Schwefelsäure, 4 g Amidosulfonsäure und 700 g Eis laufen. Man rührte 1 h nach und erwärmte dann auf 60°C. Danach ließ man 50 gew.-%ige Natronlauge zulaufen, bis der pH-Wert des Reaktionsgemisches 1,5 betrug. Man saugte ab, wusch mit Wasser nach, trocknete und erhielt 63,5 g des Farbstoffs der Formel 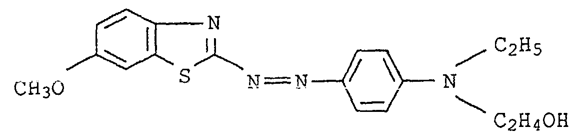 (Reinheit: 96 %).

### Beispiel 5

In ein Rührgefäß wurden 172 ml Wasser, 115 g 85 gew.-%ige Phosphorsäure und 34 g 96 gew.-%ige Schwefelsäure vorgelegt. In diese Mischung wurden 41 g 2-Amino-7-methoxybenzthiazol (88,5 gew.-%ig) eingetragen und bei 50 bis 60°C gelöst. Danach kühlte man die Lösung auf -5 bis +2^{o}C und trug zweimal hintereinander jeweils 5 g Natriumnitrit und 20 g 96 gew.-%ige Schwefelsäure und anschließend weitere 5 g Natriumnitrit ein. Danach rührte man 1 h bei -5 bis +2^{o}C nach.

Die resultierende Lösung ließ man bei -2 bis 0°C zu einer Lösung von 35 g N-Ethyl-N-(2-hydroxyethyl)anilin in 600 ml Wasser, 29 g 96 gew.-%ige Schwefelsäure, 4 g Amidosulfonsäure und 700 g Eis laufen. Man rührte 1 h nach und erwärmte dann auf 55°C. Danach ließ man 50 gew.-%ige Natronlauge zulaufen, bis der pH-Wert des Reaktionsgemisches 1,5 betrug. Man saugte ab, wusch mit Wasser nach, trocknete und erhielt 63,7 g des Farbstoffs der Formel 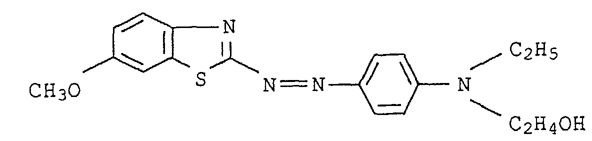 (Reinheit: 97 %).

## Patentansprüche

1. Verfahren zur Herstellung von Azofarbstoffen der Formel I 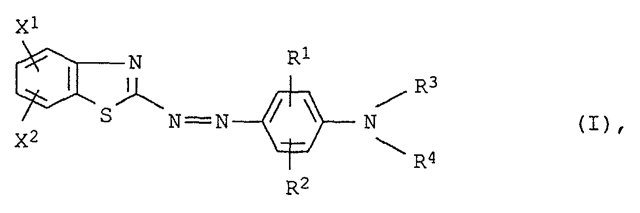 in der
X¹ Wasserstoff, Nitro oder Halogen,
X² Wasserstoff, C₁-C₄-Alkoxy oder Halogen,
R¹ Wasserstoff oder C₁-C₄-Alkoxy,
R² Wasserstoff, C₁-C₄-Alkyl oder C₁-C₄-Alkanoylamino und
R³ und R⁴ unabhängig voneinander jeweils C₁-C₆-Alkyl, das durch Hydroxy, C₁-C₄-Alkoxy, C₁-C₄-Alkanoyloxy, Cyano oder Halogen substituiert sein kann, bedeuten,
durch Diazotierung von Aminen der Formel II 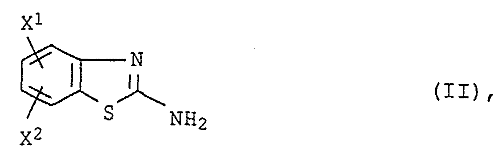 in der X¹ und X² jeweils die obengenannte Bedeutung besitzen, und anschließendes Kuppeln mit Anilinen der Formel III 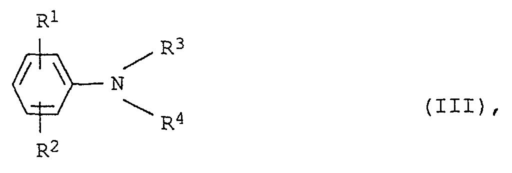 in der R¹, R², R³ und R⁴ jeweils die obengenannte Bedeutung besitzen, dadurch gekennzeichnet, daß man
a) in einem 1. Schritt die Diazotierung des Amins der Formel II in einer Mischung, bestehend im wesentlichen aus Phosphorsäure, Schwefelsäure und Wasser, mit einem üblichen Diazotierungsmittel vornimmt und
b) in einem 2. Schritt das resultierende Reaktionsgemisch zu einer wäßrig-sauren Lösung des Anilins der Formel III gibt.

2. Verfahren nach Anspruch 1, dadurch gekennzeichnet, daß man den 1. Schritt bei einer Temperatur von -20^{o}C bis +10^{o}C und den 2. Schritt bei einer Temperatur von -10°C bis +20^{o}C vornimmt.

3. Verfahren nach Anspruch 1, dadurch gekennzeichnet, daß man das Amin der Formel II in einer Mischung, bestehend im wesentlichen aus 10 bis 65 Gew.-% Phosphorsäure, 5 bis 25 Gew.-% Schwefelsäure und 10 bis 85 Gew.-% Wasser, jeweils bezogen auf das Gewicht der Mischung, diazotiert.

4. Verfahren nach Anspruch 1, dadurch gekennzeichnet, daß X¹ Wasserstoff bedeutet.

5. Verfahren nach Anspruch 1, dadurch gekennzeichnet, daß X² C₁-C₄-Alkoxy bedeutet.

6. Verfahren nach Anspruch 1, dadurch gekennzeichnet, daß R¹ und R² jeweils Wasserstoff bedeuten.

7. Verfahren nach Anspruch 1, dadurch gekennzeichnet, daß R³ und R⁴ unabhängig voneinander jeweils C₁-C₆-Alkyl, das gegebenenfalls durch Hydroxy substituiert ist, bedeuten.

## Revendications

1. Procédé de fabrication de colorants azoïques de formule I 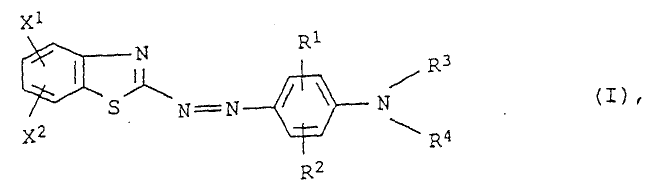 où
X¹ signifie un atome d'hydrogène, un groupement nitro ou un atome d'halogène,
X² signifie un atome d'hydrogène, un groupement alcoxy en C₁-C₄ ou un atome d'halogène,
R¹ signifie un atome d'hydrogène ou un groupement alcoxy en C₁-C₄,
R² signifie un atome d'hydrogène, un groupement alkyle en C₁-C₄ ou alcanoylamino en C₁-C₄ et
R³ et R⁴ signifient chacun indépendamment l'un de l'autre, un groupement alkyle en C₁-C₆ qui peut être substitué par un groupement hydroxy, alcoxy en C₁-C₄, alcanoyloxy en C₁-C₄, cyano ou un atome d'halogène,
par diazotation d'amines de formule II 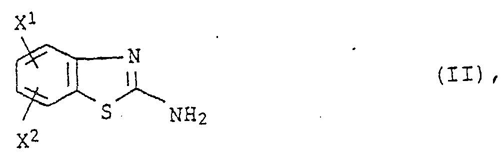 où X¹ et X² prennent chacun la signification susmentionnée, puis par copulations avec des anilines de formule III 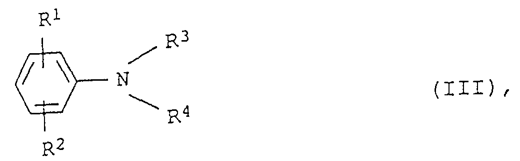 où R¹, R², R³ et R⁴ prennent chacun la signification susmentionnée, caractérisé en ce que
a) dans une première étape, on effectue la diazotation de l'amine de formule II dans un mélange, constitué principalement d'acide phosphorique, d'acide sulfurique et d'eau, avec un agent de diazotation classique et
b) dans une deuxième étape, on ajoute le mélange réactionnel résultant à une solution aqueuse acide de i'aniiine de formule III.

2. Procédé selon la revendication 1, caractérisé en ce que l'on mène la première étape à une température de -20°C à +10°C et la deuxième étape à une température de -10°C à +20°C.

3. Procédé selon la revendication 1, caractérisé en ce que l'on diazote l'amine de formule II dans un mélange, constitué principalement de 10 à 65 % en poids d'acide phosphorique, 5 à 25 % en poids d'acide sulfurique et 10 à 85 % en poids d'eau, par rapport, chaque fois, au poids du mélange.

4. Procédé selon la revendication 1, caractérisé en ce que X¹ signifie un atome d'hydrogène.

5. Procédé selon la revendication 1, caractérisé en ce que X² signifie un groupement alcoxy en C₁-C₄.

6. Procédé selon la revendication 1, caractérisé en ce que R¹ et R² signifient chacun un atome d'hydrogène.

7. Procédé selon la revendication 1, caractérisé en ce que R³ et R⁴ signifient chacun indépendamment l'un de l'autre un groupement alkyle en C₁-C₆ éventuellement substitué par un groupement hydroxy.

## Claims

1. A process for preparing azo dyes of the formula I 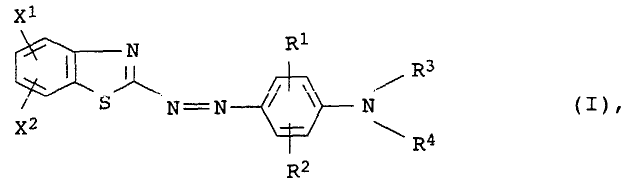 where
X¹ is hydrogen, nitro or halogen,
X² is hydrogen, C₁-C₄-alkoxy or halogen,
R¹ is hydrogen or C₁-C₄-alkoxy,
R² is hydrogen, C₁-C₄-alkyl or C₁-C₄-alkanoylamino, and
R³ and R⁴ are independently of each other C₁-C₆-alkyl with or without hydroxyl, C₁-C₄-alkoxy, C₁-C₄-alkanoyloxy, cyano or halogen substitution,
by diazotization of amines of the formula II 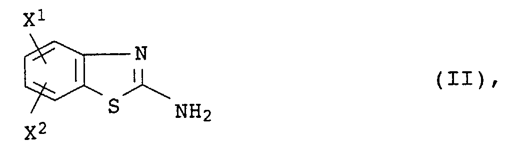 where X¹ and X² are each as defined above, and subsequent coupling with anilines of the formula III 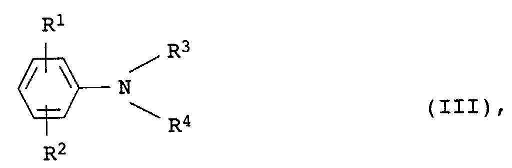 where R¹, R², R³ and R⁴ are each as defined above, which comprises
a) first diazotizing the amine of the formula II in a mixture consisting essentially of phosphoric acid, sulfuric acid and water using a customary diazotizing agent, and
b) secondly, adding the resulting reaction mixture to an aqueous acidic solution of the aniline of the formula III.

2. A process as claimed in claim 1 wherein step 1 is carried out at from -20°C to +10°C and step 2 at from -10°C to +20°C.

3. A process as claimed in claim 1 wherein the amine of the formula II is diazotized in a mixture consisting essentially of from 10 to 65% by weight of phosphoric acid, from 5 to 25% by weight of sulfuric acid and from 10 to 85% by weight of water, each based on the weight of the mixture.

4. A process as claimed in claim 1 wherein X¹ is hydrogen.

5. A process as claimed in claim 1 wherein X² is C₁-C₄-alkoxy.

6. A process as claimed in claim 1 wherein R¹ and R² are each hydrogen.

7. A process as claimed in claim 1 wherein R³ and R⁴ are independently of each other unsubstituted or hydroxyl-substituted C₁-C₆-alkyl.
